# EUROPEAN PATENT APPLICATION

(11) **EP 3 620 876 A1**
(43) Date of publication of application: **11.03.2020**
(21) Application number: 19189878.2
(22) Date of filing: 02.08.2019
(51) Int. Cl.: G05B 19/409, G06F 3/01, G06K 9/00, B65B 57/12, B65G 54/02

(54) **A SYSTEM AND A METHOD FOR CONTROLLING A PACKAGING MACHINE**

(30) Priority: 07.09.2018 EP 18193282
(71) Applicant: Tetra Laval Holdings & Finance S.A., 1009 Pully (CH)
(72) Inventor: Caltabiano, Daniele, 41124 Modena (IT)
(74) Representative: Tetra Pak - Patent Attorneys SE

(57) **Abstract**

A system is disclosed comprising a control unit configured to communicate with independently movable objects in a packaging machine, a processing unit configured to select a first movable object, a position sensor configured to register spatial position data of the user's position in a physical coordinate system, the processing unit is configured to determine a change in spatial position data in response to a movement of the user in the physical coordinate system, determine a first control command based on the change in the spatial position data, send the first control command to the control unit, the control unit is configured to move the first movable object along a track in response to the first control command. A related method is also disclosed.

## Description

### Technical Field

The invention relates to a system for controlling a packaging machine having independently movable objects configured to manipulate packaging containers, and to a method of controlling a packaging machine.

### Background

Various systems exist for controlling the motion of e.g. packaging containers when transported along conveyor tracks in a package container production line. Manipulation of the motion trajectories of such packaging containers is associated with several challenges in high-speed production lines where increased throughput is desired. The packaging containers undergo a sequence of operations executed in the production line. The various operations may require e.g. manipulation of the positions of the packaging containers, such as moving groups of packaging containers from a main flow of packaging containers, in order to direct the groups of packaging containers to different applications, e.g. sealing or wrapping operations. Conveyor systems based on linear motor technology have been proposed for manipulating the packaging containers in these situations. These conveyor systems typically comprise a closed loop track, and a plurality of movable objects or carts, which are independently moved along the track by individually controlling a plurality of solenoids along the track. The independently movable objects or carts are controlled to engage the packaging containers with various operations.

A problem arises in manufacturing industries such as in the packaging industry where a multitude of objects in a machine, such as the movable objects or carts for manipulating packaging containers, needs to be re-positioned or calibrated or otherwise manually displaced in various pre-production procedures. This is a resource and time consuming procedure as each object is independently movable and has to be engaged separately. Often an iterative re-positioning procedure has to be performed, where an object is moved step by step in the machine controller and each time the operator has to check the current position in the machine, until the correct position can be verified. Thus, in addition to such procedures being cumbersome for the operator, the off-line time is increased and the throughput of the production line is decreased.

### Summary

It is an object of the invention to at least partly overcome one or more limitations of the prior art. In particular, it is an object to provide an improved system for controlling a packaging machine, in particular allowing for improved calibration and re-positioning procedures of a plurality of independently movable objects in such packaging machine.

In a first aspect of the invention, this is achieved by a system for controlling a packaging machine where the packaging machine comprises independently movable objects configured to manipulate packaging containers. The system comprises a control unit configured to communicate with the independently movable objects and to control the positions thereof along a track. The system comprises a processing unit in communication with the control unit and being configured to associate the independently movable objects with respective object identifier data, receive first input data from a user, and associate the first input data with object identifier data of a first movable object for selecting the first movable object amongst the independently movable objects. The system comprises a position sensor configured to register spatial position data of the user's position in a physical coordinate system. The processing unit is configured to determine a change in the spatial position data in response to a movement of the user in the physical coordinate system, and determine a first control command based on the change in the spatial position data, send the first control command to the control unit. The control unit is configured to move the first movable object along the track in response to the first control command.

In a second aspect of the invention, this is achieved by a method of controlling a packaging machine comprising independently movable objects configured to manipulate packaging containers, the independently movable objects communicating with a control unit configured to control the positions of the independently movable objects along a track. The method comprises associating the independently movable objects with respective object identifier data, registering first input data from a user, associating the first input data with object identifier data of a first movable object for selecting the first movable object amongst the independently movable objects, registering position sensor input data from the user comprising registering spatial position data of the user's position in a physical coordinate system, determining a change in the spatial position data in response to a movement of the user in the physical coordinate system, determining a first control command based on the change in the spatial position data, sending the first control command to the control unit, moving the first movable object along the track in response to the first control command.

In a third aspect of the invention, this is achieved by a computer program product comprising instructions which, when the program is executed by a computer, cause the computer to carry out the steps of the method according to the second aspect.

In a fourth aspect of the invention, this is achieved by a packaging machine comprising a system according to the first aspect, and/or a packaging machine performing the method according to the second aspect.

Further examples of the invention are defined in the dependent claims, wherein features for the first aspect may be implemented for the second and subsequent aspects, and vice versa.

Having a control unit configured to move the first movable object along the track in response to a first control command based on change in spatial position data registered of a user's position in a physical coordinate system, provides for a facilitated and efficient manipulation of independently movable objects, since the objects can be intuitively re-positioned with the user's gestures in front of the packaging machine, without having to physically engage the movable objects or provide input to other machine interfaces.

Still other objectives, features, aspects and advantages of the invention will appear from the following detailed description as well as from the drawings.

### Drawings

Embodiments of the invention will now be described, by way of example, with reference to the accompanying schematic drawings.
Fig. 1 is a schematic view of a system for controlling a packaging machine comprising a control unit configured to communicate with the independently movable objects in the packaging machine, and a sensor registering spatial position data of a user's position in a physical coordinate system;
Figs. 2a-b are schematic views of a system for controlling a packaging machine by determining changes in spatial position data in response to different movements of the user in a physical coordinate system;
Fig. 3 is a schematic view of a system for controlling a packaging machine by determining changes in spatial position data in response to different movements of the user in a physical coordinate system;
Fig. 4a is a flowchart of a method of controlling a packaging machine; and
Fig. 4b is a further flowchart of a method of controlling a packaging machine.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

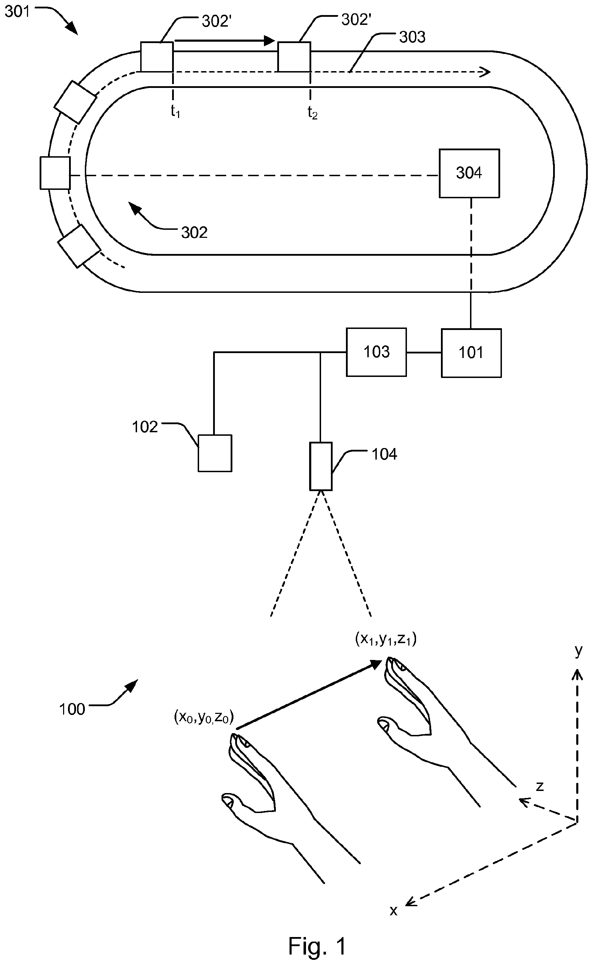

Fig. 1 is a schematic illustration of a system 100 for controlling a packaging machine 301. The packaging machine 301 comprises independently movable objects 302, 302', configured to manipulate packaging containers (not shown). The system 100 comprises a control unit 101 configured to communicate with the independently movable objects 302, 302', and to control the positions thereof along a track 303. The control unit 101 may also be configured to control the speed by which each the independently movable object 302, 302', moves along the track 303. The track 303 may be an endless loop as exemplified in Fig. 1. Although the track 303 is shown as an elliptic track, it is conceivable that the track 303 may have varying shapes, i.e. extending along a variety of curves with different radiuses of curvatures. A user is schematically illustrated in Fig. 1 as a hand moving in a physical coordinate system (x, y, z). The system 100 comprises a processing unit 103 in communication with the control unit 101 and which is configured to associate the independently movable objects 302, 302', with respective object identifier data, such as a unique address that identifies each independently movable object 302, 302'. The processing unit 103 is configured to receive first input data from the user, and associate the first input data with object identifier data of a first movable object 302' for selecting the first movable object 302' amongst the independently movable objects 302, 302'. The first input data may thus uniquely identify a particular movable object 302 such as the first movable object 302'. The system 100 comprises a position sensor 104 configured to register spatial position data of the user's position in a physical coordinate system (x, y, z). The spatial position data may comprise coordinates in two or three dimensions. The spatial position data may also comprise temporal data, i.e. when in time the user is registered at the different coordinates in the physical coordinate system (x, y, z). The processing unit 103 is configured to determine a change in the spatial position data in response to a movement of the user in the physical coordinate system (x, y, z). Fig. 1 is a schematic illustration showing the user moving from coordinates (x_{0,} y₀, z₀) to coordinates (x₁, y₁, z₁). The processing unit 103 is thus configured to determine the change in position when the user moves between the aforementioned coordinates. As mentioned, the position sensor 104 may be configured to register the timing of such movement, and the processing unit 103 may thus be configured to determine said change over time, as well as geometrically. The change in the spatial position data may thus collectively refer to both temporal and geometrical changes. The distance between the aforementioned coordinates may accordingly be determined, as well as the velocity and acceleration of the movement between (x_{0,} y₀, z₀) and (x₁, y₁, z₁).

The processing unit 103 is configured to determine a first control command based on the change in the spatial position data, and send the first control command to the control unit 101. The control unit 101 is configured to move the first movable object 302' along the track 303 in response to the first control command. For example, when the user moves from (x_{0,} y₀, z₀) to (x₁, y₁, z₁), the selected movable object 302' moves from the position indicated with t₁ to the position indicated with t₂ along the track 303 in Fig. 1. The control unit 101 may communicate with an intermediate machine controller or drive element 304 of the packaging machine 301, which may be configured to translate the first control command into the motion by which first movable object moves 302' along the track 303. Any of the movable objects 302, 302', may thus be selected via the first input data and be subsequently moved along the track 303 in response to a change of the user's position in the physical coordinate system, registered as spatial position data. Having a control unit 101 configured to move the first movable object 302' along the track in response to a first control command based on change in spatial position data registered of a user's position in a physical coordinate system, provides for a facilitated and efficient manipulation of independently movable objects 302, 302', since the objects can be intuitively re-positioned with the user's gestures in front of the packaging machine 301, without having to physically engage the movable objects 302, 302', or provide input to other machine interfaces. The movable objects 302, 302', may thus be conveniently manipulated with a minimum of machine interaction. The positions of the movable objects 302 may be directly verified, e.g. in a calibration of re-positioning procedure, by the user when presenting the movements in the coordinate system (x,y,z). This provides for a resource efficient procedure, and the down time of the production line can be greatly reduced. Operational safety may also be increased since the user do not need to physically interact with the moveable objects 302, 302'.

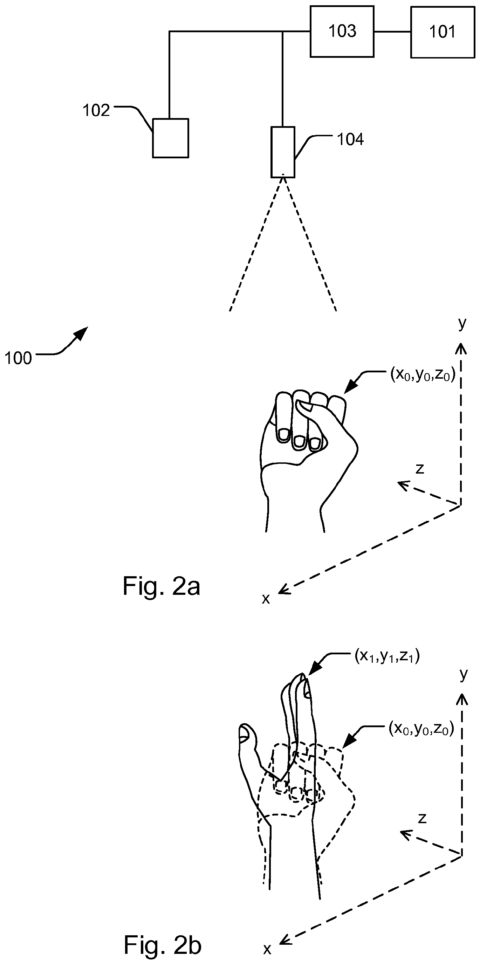

Several different movements and gestures may be utilized for providing the spatial position data for determining different control commands. It is conceivable that besides moving the entire hand from a first position (x_{0,} y₀, z₀) to a second position (x₁, y₁, z₁), as schematically shown in Fig. 1, determining a change in spatial data may also comprise determining a change of the shape of the hand. For example, when changing the hand from a fist to a palm, as illustrated in Figs. 2a-b, the position sensor 104 will also detect a change in the spatial position of the hand, e.g. the top portion of the hand moves from a first position (x_{0,} y₀, z₀) to a second position (x₁, y₁, z₁). In one example, the position sensor 104 is configured to register a first gesture, such as a fist of the hand, to

In one example, the processing unit 103 is configured to determine a control command to activate a selected movable object 302' in response to a first gesture, such as a fist of the hand. I.e. activating the selected movable object 302' may comprise proceeding with determining a change in the spatial position data in response to the user moving the fist in the physical coordinate system (x, y, z), and accordingly determine subsequent control commands for instructing a corresponding movement of the selected movable object 302'. For example, once the desired movement of the object 302' has been done, the user changes the hand from a fist to a palm, and a control command is sent to the control unit 101 to deactivate the selected object 302' so that further movement of the user do not cause further movement of the selected object 302'. I.e. subsequent change in spatial position data does not instruct movement of the mentioned object 302'. It is also conceivable that such activation and deactivation is provided by the first input data, e.g. by selecting and de-selecting the movable object 302, 302', to be manipulated.

The system 100 may comprise a second sensor 102 for receiving the first input data. The second sensor 102 may comprise any sensor configured to receive input from the user, such as a touch sensor configured to receive touch input, or an acoustic sensor configured to receive a voice command as described further below. As with the position sensor 104, the second sensor 102 may also be configured to register spatial position data of the user's position in a physical coordinate system (x, y, z). I.e. the second sensor 102 may comprise a motion sensor which is configured to register a motion of the user as the first input data. E.g. the user may move to a particular physical coordinate (x, y, z) which is associated with the selection of the first movable object 302'. The user may also perform gestures in the physical coordinate system (x, y, z), which are associated with particular object identifier data, and/or to step through a sequence of selecting the different movable objects 302 until the desired object 302' is chosen in response to a gesture. The sensors 102, 104, may be combined, i.e. comprise a single motion sensor in the example the second sensor 102 comprises a motion sensor as described.

The position sensor 104 may be configured to register reference coordinates (x_{0,} y₀, z₀) in the physical coordinate system by detecting a first gesture of the user, and to register control coordinates (x₁, y₁, z₁) in the physical coordinate system by detecting a second gesture of the user. As exemplified above with respect to e.g. Figs. 1 and 2a-b, the first and second gestures may comprise a translatory movement in the coordinate system (x,y,z) of e.g. the entire hand of the user, or changes such as between a fist and a palm of the hand. Many other gestures are conceivable such moving the hand in a circle or in any other defined path which produce a change in the spatial position data which is associated with a corresponding control command for the movable objects 302, 302'. Hence, the processing unit 103 may be configured to determine the first control command based on a change between the reference coordinates (x_{0,} y₀, z₀) and the control coordinates (x₁, y₁, z₁).

The reference- and control coordinates may comprise geometrical data of the user's size and/or shape in the physical coordinate system (x,y,z). Thus, the position sensor 104 and the processing unit 103 may be configured to detect a change in the size and/or a shape of the user. E.g. the user may hold a palm at the reference coordinates (x_{0,} y₀, z₀) before changing to a palm, which is registered as control coordinates (x₁, y₁, z₁), and from which the processing unit can determine an increase in size of the users hand due to the increased projected area of the palm compared to the fist at the imaging plane of the position sensor 104. Likewise, the change between a fist and a palm can be registered as a change in shape of the users hand. The latter may be advantageous when it is desired to compensate for movement in the z-direction, i.e. increase and decrease in the distance between the user and the position sensor 104. For example, the user may move so that the aforementioned distance is increased, creating a perceived reduction in the size of the user's hand at the imaging plane of the position sensor 104. This change may be utilized as a further control command, or be discarded as a change by instead determining the shape of the hand, which may be a palm at both coordinates (x_{0,} y₀, z₀) and (x₁, y₁, z₁). The degree of control and robustness of the system 100 may be increased in the latter case since the user can move more freely relative the packaging machine 301 while maintaining an accurate registration of the change in the spatial positioning data. The position sensor 104 and the processing unit 103 may thus be configured to determine if the user forms a fist, palm, or presenting any number of fingers as a gesture, or other gestures having different shapes.

The second sensor 102 may comprises an acoustic sensor configured to receive a voice command from the user as the first input data. The processing unit 103 may be configured to associate the voice command with the first movable object 302'. The user may thus vocally select the first movable object 302' which may subsequently be moved along the track 303 by determining a control command as described above. Each of the movable objects 302, 302', and the respective object identifier data may thus be associated with specific voice commands for being selected by the user's speech. This provides for a facilitated and particularly intuitive control of the packaging machine 301.

The position sensor 104 may comprise a motion sensor configured to detect spatial position data comprising coordinates of the user in the physical coordinate system (x,y,z) as described above. Further, the position sensor 104 may comprise a motion sensor configured to detect spatial position data comprising a velocity and/or an acceleration of the user in the physical coordinate system (x,y,z). The processing unit 103 may in the latter case be configured to determine a control command based on the detected velocity and/or acceleration so that the control unit 101 may move a movable object 302' in dependence on the detected velocity and/or acceleration. E.g. the speed by which a first movable object 302' moves along the track 302 may depend on the speed by which a user moves in the coordinate system (x,y,z). The speed and/or acceleration of the first movable object 302' may thus increase with the speed and/acceleration of the user's movement. This provides for further enhancing the control of the plurality of movable objects 302, 302', and may reduce the time required for re-positioning procedures.

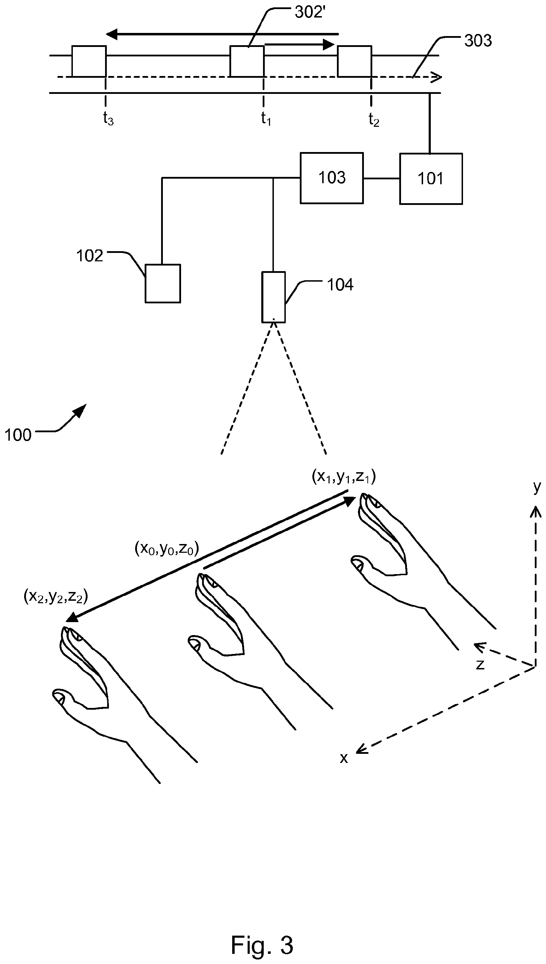

The processing unit 103 may be configured to continuously determine the change in the spatial position data in real-time, and be configured to determine a sequence of control commands each corresponding to a respective change in the spatial position data at defined time intervals. The control unit 101 may be configured to move the first movable object 302' along the track 303 in response to the sequence of control command concurrently with the aforementioned change in the spatial position data in real-time. Thus, the system 100 may operate in real-time and the user may present a variety of gestures in the coordinate system which directly controls the movable objects 302, 302', along the track 303. The user may thus observe immediate feedback from the actual positions of the movable objects 302, 302', and may adapt the gestures accordingly for a fast and immediate fine-tuning of the positions in the packaging machine 301. Fig. 3 is a schematic illustration showing a user's continuous movement in the physical coordinate system from coordinates (x₀,y₀,z₀) to (x₁,y₁,z₁), and further on to (x₂,y₂,z₂). The first movable object 302' moves in response to the aforementioned movement between the positions indicated at t₁, t₂, and t₃, along the track 303. The time interval for sampling of the user's movement and the determining of the associated sequence of control commands may be optimized to attain a fluid control of the packaging machine 301.

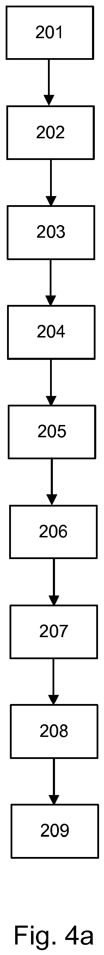

The flowchart of Fig. 4a, in conjunction with Figs. 1 - 3 as described above, discloses a method 200 of controlling a packaging machine 301 comprising independently movable objects 302, 302', configured to manipulate packaging containers. As described above, the independently movable objects 302, 302', communicates with a control unit 101 configured to control the positions of the independently movable objects 302, 302', along a track 303. The method 200 comprises associating 201 the independently movable objects 302, 302', with respective object identifier data, registering 202 first input data from a user, and associating 203 the first input data with object identifier data of a first movable object 302' for selecting the first movable object 302' amongst the independently movable objects 302, 302'. The method 200 comprises registering 204 position sensor input data from the user comprising registering 205 spatial position data of the user's position in a physical coordinate system (x, y, z), determining 206 a change in the spatial position data in response to a movement of the user in the physical coordinate system (x, y, z), and determining 207 a first control command based on the change in the spatial position data. The method 200 comprises sending 208 the first control command to the control unit 101, and moving 209 the first movable object 302' along the track 303 in response to the first control command. The method 200 thus provides for the advantageous benefits as described above in relation to Figs. 1 - 3 for the system 100. The method 200 thus provides for a facilitated and efficient manipulation of a plurality of independently movable objects in a packaging machine 301.

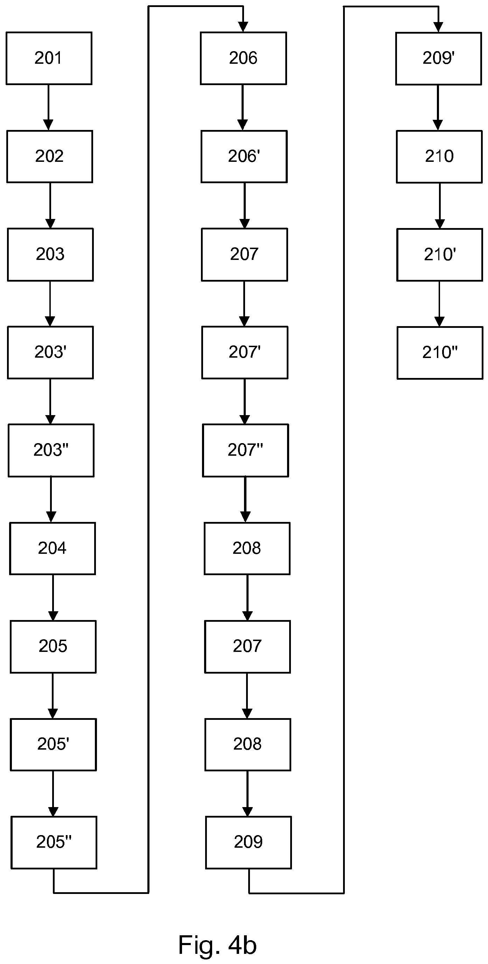

Fig. 4b is a further flowchart of a method 200 of controlling a packaging machine 301. Determining the change in the spatial position data may comprise registering 205' reference coordinates (x_{0,} y₀, z₀) in the physical coordinate system by detecting a first gesture of the user, registering 205" control coordinates (x₁, y₁, y₁) in the physical coordinate system by detecting a second gesture of the user, and further determining 207' the first control command based on a change between the reference coordinates (x_{0,} y₀, z₀) and the control coordinates (x₁, y₁, y₁).

A distance moved by the first movable object 302' along the track 303 may be correlated 210 to the distance between the reference coordinates (x_{0,} y₀, z₀) and the control coordinates (x₁, y₁, z₁) in the physical coordinate system (x,y,z). Turning again to Fig. 3, the distance by which the first movable object 302' moves along the track 303 correlates to the distance between the corresponding coordinates. I.e. the distance between (x_{0,} y₀, z₀) and (x₁, y₁, z₁) is shorter than between (x₁, y₁, z₁) and (x₂, y₂, z₂). The corresponding movement of the movable object 302' between t₁ and t₂ is thus shorter than the movement between t₂ and t₃.

Further, a speed or acceleration of the first movable object 302' may be correlated 210' to the distance between the reference coordinates (x_{0,} y₀, z₀) and the control coordinates (x₁, y₁, z₁) in the physical coordinate system. E.g. the absolute value of the vector determined from the gesture is used as a value for the speed or acceleration of the selected object 302'. The movement between (x₁, y₁, z₁) and (x₂, y₂, z2) in the example of Fig. 3 may thus produce a greater acceleration and/or speed of the movable object 302' than the movement between (x_{0,} y₀, z₀) and (x₁, y₁, z₁). Such control over speed and acceleration provides for further enhancing the control of the movable objects 302, 302', and an intuitive handling thereof.

As mentioned above, a speed or acceleration of the first movable object 302' may be correlated 210" to a speed or acceleration of the user which is registered in the physical coordinate system. A quicker movement of the user may thus result in a quicker movement of the selected object 302'.

The method 200 may comprise receiving 203' a voice command from the user as the first input data, and associating 203" the voice command with the first movable object 302', as described above.

The method 200 may comprise continuously 206' determining the change in the spatial position data in real-time, and determining 207" a sequence of control commands each corresponding to a respective change in the spatial position data at defined time intervals. The method 200 may comprise moving 209' the first movable object along 302' the track 303 in response to the sequence of control command concurrently with said change in the spatial position data in real-time.

A computer program product is provided comprising instructions which, when the program is executed by a computer, cause the computer to carry out the steps of the method 200 as described above in relation to Figs. 4a-b.

A packaging machine is provided (not shown) which comprises a system 100 as described above in relation to Figs. 1 - 3, and/or which performs the method 200 as described above in relation to Figs. 4a-b. The packaging machine 301 thus provides for the advantageous benefits as described above in relation to the system 100 and the method 200, in particular allowing for a facilitated and efficient manipulation of a plurality of independently movable objects.

From the description above follows that, although various embodiments of the invention have been described and shown, the invention is not restricted thereto, but may also be embodied in other ways within the scope of the subject-matter defined in the following claims.

## Claims

1. A system (100) for controlling a packaging machine (301) comprising independently movable objects (302, 302') configured to manipulate packaging containers, the system comprises
a control unit (101) configured to communicate with the independently movable objects (302, 302') and to control the positions thereof along a track (303),
a processing unit (103) in communication with the control unit (101) and being configured to
associate the independently movable objects (302, 302') with respective object identifier data,
receive first input data from a user,
associate the first input data with object identifier data of a first movable object (302') for selecting the first movable object (302') amongst the independently movable objects (302, 302'),
a position sensor (104) configured to register spatial position data of the user's position in a physical coordinate system (x, y, z),
wherein the processing unit (103) configured to
determine a change in the spatial position data in response to a movement of the user in the physical coordinate system (x, y, z),
determine a first control command based on the change in the spatial position data,
send the first control command to the control unit (101),
wherein the control unit (101) is configured to move the first movable object (302') along the track (303) in response to the first control command.

2. A system according to claim 1, wherein the position sensor (104) is configured to
register reference coordinates (x_{0,} y₀, z₀) in the physical coordinate system by detecting a first gesture of the user, (currently no movement when having open hand, only when making fist)
register control coordinates (x₁, y₁, z₁) in the physical coordinate system by detecting a second gesture of the user,
wherein the processing unit (103) is configured to determine the first control command based on a change between the reference coordinates (x_{0,} y₀, z₀) and the control coordinates (x₁, y₁, z₁).

3. A system according to claim 2, wherein the reference- and control coordinates comprise geometrical data of the user's size and/or shape in the physical coordinate system.

4. A system according to any of claims 1 - 3, comprising a second sensor (102) for receiving the first input data, wherein the second sensor comprises an acoustic sensor configured to receive a voice command from the user as the first input data, where the processing unit (103) is configured to associate the voice command with the first movable object (302').

5. A system according to any of claims 1 - 4, wherein the position sensor (104) comprises a motion sensor configured to detect spatial position data comprising coordinates of the user in the physical coordinate system, and/or a velocity of the user in the physical coordinate system.

6. A system according to any of claims 1 - 5, wherein the processing unit (103) is configured to
continuously determine the change in the spatial position data in real-time,
determine a sequence of control commands each corresponding to a respective change in the spatial position data at defined time intervals,
wherein the control unit (101) is configured to move the first movable object (302') along the track (303) in response to the sequence of control command concurrently with said change in the spatial position data in real-time.

7. A method (200) of controlling a packaging machine (301) comprising independently movable objects (302, 302') configured to manipulate packaging containers, the independently movable objects (302, 302') communicating with a control unit (101) configured to control the positions of the independently movable objects (302, 302') along a track (303), the method comprises
associating (201) the independently movable objects (302, 302') with respective object identifier data,
registering (202) first input data from a user,
associating (203) the first input data with object identifier data of a first movable object (302') for selecting the first movable object (302') amongst the independently movable objects (302, 302'),
registering (204) position sensor input data from the user comprising registering (205) spatial position data of the user's position in a physical coordinate system (x, y, z),
determining (206) a change in the spatial position data in response to a movement of the user in the physical coordinate system (x, y, z),
determining (207) a first control command based on the change in the spatial position data,
sending (208) the first control command to the control unit (101),
moving (209) the first movable object (302') along the track (303) in response to the first control command.

8. A method according to claim 7, wherein determining the change in the spatial position data comprises
registering (205') reference coordinates (x_{0,} y₀, z₀) in the physical coordinate system by detecting a first gesture of the user,
registering (205") control coordinates (x₁, y₁, y₁) in the physical coordinate system by detecting a second gesture of the user,
determining (207') the first control command based on a change between the reference coordinates (x_{0,} y₀, z₀) and the control coordinates (x₁, y₁, y₁).

9. A method according to claim 8, wherein a distance moved by the first movable object (302') along the track (303) is correlated (210) to the distance between the reference coordinates (x_{0,} y₀, z₀) and the control coordinates (x₁, y₁, y₁) in the physical coordinate system.

10. A method according to claim 8 or 9, wherein a speed or acceleration of the first movable object (302') is correlated (210') to the distance between the reference coordinates (x_{0,} y₀, z₀) and the control coordinates (x₁, y₁, y₁) in the physical coordinate system.

11. A method according to any of claims 8 - 10, wherein a speed or acceleration of the first movable object (302') is correlated (210") to a speed or acceleration of the user registered in the physical coordinate system.

12. A method according to any of claims 7 - 11, comprising
receiving (203') a voice command from the user as the first input data, and associating (203") the voice command with the first movable object (302').

13. A method according to any of claims 7 - 12, comprising
continuously (206') determining the change in the spatial position data in real-time,
determining (207") a sequence of control commands each corresponding to a respective change in the spatial position data at defined time intervals,
moving (209') the first movable object along (302') the track (303) in response to the sequence of control command concurrently with said change in the spatial position data in real-time.

14. A computer program product comprising instructions which, when the program is executed by a computer, cause the computer to carry out the steps of the method according to any of claims 7-13.

15. A packaging machine comprising a system (100) according to any of claims 1 - 6, and/or performing the method (200) according to any of claims 7-13.
